# EUROPEAN PATENT APPLICATION

(11) **EP 4 273 956 A1**
(43) Date of publication of application: **08.11.2023**
(21) Application number: 22919465.9
(22) Date of filing: 14.01.2022
(51) Int. Cl.: H01M 4/131, H01M 4/1391

(54) **SINGLE-CRYSTAL LOW-COBALT TERNARY MATERIAL AND PREPARATION METHOD THEREFOR, SECONDARY BATTERY, BATTERY PACK, AND ELECTRIC DEVICE**

(71) Applicant: Contemporary Amperex Technology Co., Limited, Ningde, Fujian 352100 (CN)
(72) Inventor: NI, Huan, Ningde, Fujian 352100 (CN); BIE, Changfeng, Ningde, Fujian 352100 (CN); YIN, Xiang, Ningde, Fujian 352100 (CN); OUYANG, Shaocong, Ningde, Fujian 352100 (CN); DONG, Miaomiao, Ningde, Fujian 352100 (CN); LIU, Na, Ningde, Fujian 352100 (CN)
(74) Representative: Gong, Jinping
(86) International application number: PCT/CN2022/072067
(87) International publication number: WO 2023/133811

(57) **Abstract**

The present application relates to a single-crystalline-structured low-cobalt ternary positive material, a chemical formula thereof is Li₁₊ₓ(NiₐCo_{b}Mn_{c})_{1-d}M_{d}O_{2-y}A_{y}, where a mole fraction of Co element is low, 0.05 ≤ b ≤ 0.14; and in a single particle, a ratio of an average Co content per unit area of an outer layer to an average Co content per unit area of an inner core in a cross section passing through a geometric center of the particle is in a range 1.2-5.0: 1, optionally, in a range 1.4-2.0:1. The material has better structural stability and dynamic performance at low temperature and high voltage, which improves cycle performance and power performance of the secondary battery at low temperature and high voltage. The present application also provides a method for preparing the low-cobalt ternary positive material, a secondary battery, a battery module, a battery pack, and a power consumption apparatus including the material.

## Description

### TECHNICAL FIELD

The present application relates to the technical field of lithium-ion batteries, and in particular, to a single-crystalline low-cobalt ternary material. In addition, the present application also relates to a secondary battery including the single-crystalline low-cobalt ternary material and a battery package, a battery module, and a power consumption apparatus including the secondary battery.

### BACKGROUND

In recent years, with the wider application of lithium-ion batteries, the lithium-ion batteries are widely applied to energy storage power systems such as hydropower, firepower, wind power and solar power plants, as well as electric tools, electric bicycles, electric motorcycles, electric vehicles, military equipment, aerospace and other fields. With the increasing application scope of lithium-ion batteries, acceleration performance and cruising range thereof at low temperature urgently need to be improved to meet greater market demands.

At present, in a lithium-ion battery, it is a relatively effective means to use lithium iron phosphate and nickel cobalt lithium manganese ternary materials as a positive active material. Lithium iron phosphate and lithium nickel cobalt manganese are the best choice, in contrast, these materials have a higher cost due to its high cobalt content, and the lithium-ion battery suffers from reduced cycle performance, reduced power, and shortened life under low temperature and high voltage conditions. Therefore, there is an urgent need for a positive active material that enables a lithium-ion battery to have improved electrochemical performance at low temperature and high voltage, and reduce manufacturing costs.

### SUMMARY

The present application is made in view of the foregoing problems. The objective is to provide a low-cobalt ternary positive active material, which enables a secondary battery to have improved power and cycle performance at low temperature and high voltage and a lower cost.

In order to achieve the above objective, in the present application, a single-crystalline-structured low-cobalt ternary positive material is provided, where
a chemical formula of the single-crystalline low-cobalt ternary positive material is Li₁₊ₓ(NiₐCo_{b}Mn_{c})_{1-d}M_{d}O_{2-y}A_{y}, where M is one or more selected from Zr, Sr, B, Ti, Mg, Sn, and Al, A is one or more selected from S, N, F, Cl, Br and I, 0 ≤ x ≤ 0.5, 0.05 ≤ b ≤ 0.14, 3.5≤ a/b ≤ 15, 0.02≤ b×c/a ²≤ 0.21, a+b+c = 1, 0 ≤ d ≤ 0.1, 0 ≤ y < 0.2; and
in a single particle of the single-crystalline low-cobalt ternary positive material, a ratio of an average Co content per unit area of an outer layer to an average Co content per unit area of an inner core on a cross section passing through a geometric center of the particle is in a range of 1.2-5.0:1, optionally, in a range of 1.4-2.0:1, where the outer layer is a region from a surface of the particle to a depth of 200 nm towards the geometric center of the particle, and the inner core is a spherical region with a diameter of 200 nm centered on the geometric center of the particle. Further, the material particle has a radius of at least 300 nm, optionally, 400 to 4000 nm. Therefore, the present application effectively improves structural stability and dynamic properties of the positive material at low temperature and high voltage by obtaining the single-crystalline low-cobalt ternary material that satisfies the foregoing relational expressions and has a higher content of Co element in the outer layer than in the inner core, thereby improving cycle performance and power of the secondary battery at low temperature and high voltage.

In some embodiments, the particle of the low-cobalt ternary positive material has a coating layer, and the coating layer is an oxide containing Q, where Q is one or more selected from Zr, Sr, B, Ti, Mg, Sn, and Al. This is beneficial to reduce side reactions between a surface of the positive active material and an electrolytic solution, thereby improving stability and safety performance of the battery.

In some embodiments, in the chemical formula of the low-cobalt ternary positive material, 0.5 ≤ a ≤ 0.7. This is beneficial to make the low-cobalt ternary positive material have higher specific capacity and maintain better chemical stability at high voltage.

In some embodiments, the low-cobalt ternary positive material has a median particle size Dv₅₀ in a range of 1.6µm-3.6µm, optionally, in a range of 1.8µm-3.5µm. As a result, deintercalation ability of lithium-ions can be improved, and electrochemical performance of the battery can be improved.

In some embodiments, for the low-cobalt ternary positive material, based on an element Q in the oxide containing Q relative to the low-cobalt ternary positive material having a coating layer, a content of the Q is 500-5000 ppm. It is beneficial to improve the structural stability of the positive active material and reduce gas and heat production.

In a second aspect of the present application, a method for preparing a low-cobalt ternary positive material is provided, including:
step S1: mixing and sintering a positive active material precursor, a lithium salt, and an M-containing compound and performing crushing to obtain an active substance particle precursor 1, where a chemical formula of the positive active material precursor is NiₐCo_{b}Mn_{c}(OH)₂, where 3.5≤ a/b ≤ 15, 0.02≤ b×c/a² ≤ 0.21, a+b+c = 1; 0.5≤ a ≤ 0.7; and
step S2: mixing and sintering the active substance particle precursor 1 and a Co-containing compound to obtain an active substance particle precursor 2 with a surface layer rich in Co; performing tempering to obtain a low-cobalt ternary positive material;
where the low-cobalt ternary positive material is of a single crystal structure, and a chemical formula thereof is Li₁₊ₓ(NiₐCo_{b}Mn_{c})_{1-d}M_{d}O_{2-y}A_{y}, where M is one or more selected from Zr, Sr, B, Ti, Mg, Sn, and Al, Ais one or more selected from S, N, F, Cl, Br and I, 0 ≤ x ≤ 0.5, 0.05 ≤ b ≤ 0.14, 3.5≤ a/b ≤ 15, 0.02≤ b×c/a²≤ 0.21, a+b+c = 1, 0 ≤ d ≤ 0.1, 0 ≤ y < 0.2; and
in a single particle of the single-crystalline low-cobalt ternary positive material, a ratio of an average Co content per unit area of an outer layer to an average Co content per unit area of an inner core on a cross section passing through a geometric center of the particle is in a range of 1.2-5.0:1, optionally, in a range of 1.4-2.0:1, where the outer layer is a region from a surface of the particle to a depth of 200 nm towards the geometric center of the particle, and the inner core is a spherical region with a diameter of 200 nm centered on the geometric center of the particle. Further, the material particle has a radius of at least 300 nm, optionally, 400 to 4000 nm.

The method for preparing the low-cobalt ternary positive active material according to the present application has the advantages of simple preparation process, easy realization, and low cost, and may be applied in large-scale industrial production.

In some embodiments of the secondary battery, the M-containing compound in the step S1 is one or more selected from magnesium oxide, strontium oxide, titanium oxide, tin oxide, zirconium oxide, aluminum oxide, and boron oxide, optionally, zirconium oxide, strontium oxide, or magnesium oxide.

In the step S1, a sintering temperature is in a range of 800 °C-960 °C, a sintering time is 5-15 hrs, and a sintering atmosphere is air or O₂. This is conducive to fusion between particles and increases the particle size of the particle.

In some embodiments, the step S2 further includes step S2a: coating the active substance particle precursor 2 with the surface layer rich in Co with an oxide containing Q. In some embodiments, the oxide containing Q in the step S2a is one or more selected from aluminum oxide, tin oxide, zirconium oxide, boron oxide, and titanium oxide, optionally, titanium oxide. Thus, a single-crystalline low-cobalt positive active material having a coating layer is obtained, which can avoid the contact with the electrolytic solution in the secondary battery and stabilize the structure of the single-crystalline low-cobalt positive active material.

In some embodiments, the Co-containing compound in the step S2 is one or more selected from cobalt hydroxide, cobalt oxyhydroxide, cobalt oxide, cobalt acetate, or cobalt oxalate. In some embodiments, in the step S2, the Co-containing compound is added in such an amount that a ratio of a molar amount of Co added thereto to a total molar amount of the metal elements Ni, Co, Mn in the positive active material precursor obtained in the step S1 is 0.005-0.05:1, optionally, 0.01-0.03:1.

In some embodiments, in the step S2, a sintering temperature is in a range of 650-750 °C, optionally, in a range of 700-720 °C, a sintering time is 2-8 hrs, optionally, 4-5 hrs, and a sintering atmosphere is air or O₂. Thus, a positive active material with unevenly distributed Co elements is obtained.

In a third aspect of the present application, a secondary battery is provided, including the single-crystalline low-cobalt positive active material in the first aspect of the present application or the single-crystalline low-cobalt positive active material prepared according to the method of the second aspect of the present application.

In a fourth aspect of the present application, a battery module is provided, including the secondary battery in the third aspect of the present application.

In a fifth aspect of the present application, a battery pack is provided, including the battery module in the fourth aspect of the present application.

In a sixth aspect of the present application, a power consuming apparatus is provided, including at least one selected from the secondary battery in the third aspect of the present application, the battery module in the fourth aspect of the present application, or the battery pack in the fifth aspect of the present application.

Since the active positive material provided by the present application has single crystal morphology, a cobalt-rich outer layer for the overall low-cobalt material, as well as a relatively small particle size, a secondary battery prepared using the single-crystalline low-cobalt positive active material of the present application has improved cycle performance and power performance at low temperature and high voltage and has a long battery life. Correspondingly, the battery pack, the battery module, and the power consumption apparatus provided by the present application also have a good cycle capability and long-term endurance at low temperature and high voltage.

### BRIEF DESCRIPTION OF THE DRAWINGS

FIG. 1 shows a SEM image of a low-cobalt positive active material of Example 1 according to the present application.
FIG. 2 shows a line scan Co element (FIG. 2A) diagram and radial distribution of Co element content (mass fraction) (FIG. 2B), of a low-cobalt positive active material of the present application.
FIG. 3 shows a volume average particle size distribution diagram according to an embodiment of the present application.
FIG. 4 is a schematic diagram of a secondary battery according to an embodiment of the present application.
FIG. 5 is an exploded view of the secondary battery according to the embodiment of the present application shown in FIG. 4.
FIG. 6 is a schematic diagram of a battery module according to an embodiment of the present application.
FIG. 7 is a schematic diagram of a battery pack according to an embodiment of the present application.
FIG. 8 is an exploded view of the battery pack according to the embodiment of the present application shown in FIG. 7.
FIG. 9 is a schematic diagram of a power consumption apparatus according to an embodiment of the present application.

DESCRIPTION OF REFERENCE SIGNS

1 battery pack; 2 upper box; 3 lower box; 4 battery module; 5 secondary battery; 51 housing; 52 electrode assembly; 53 top cover assembly

### DESCRIPTION OF EMBODIMENTS

Hereinafter, embodiments that specifically disclose a negative electrode sheet and a method preparing the same, a positive electrode sheet, a secondary battery, a battery module, a battery pack, and a power consumption apparatus of the present application will be described in detail with reference to the accompanying drawings as appropriate. However, unnecessarily detailed descriptions may be omitted in some cases. For example, detailed descriptions of well-known matters and repeated descriptions of practically identical structures are omitted. This is done to avoid unnecessarily redundant descriptions for ease of understanding by persons skilled in the art. In addition, the drawings and the following description are provided for a full understanding of the present application by persons skilled in the art, and are not intended to limit the subject matter in the claims.

A "range" disclosed herein is defined in the form of a lower limit and an upper limit. A given range is defined by selecting a lower limit and an upper limit, and the selected lower limit and upper limit define a boundary of a particular range. The range defined in this manner may or may not include end values, and may be combined arbitrarily, that is, any lower limit may be combined with any upper limit to form a range. For example, if ranges of 60-120 and 80-110 are listed for a particular parameter, it is understood that ranges of 60-110 and 80-120 are also contemplated. In addition, if the minimum range values listed are 1 and 2, and the maximum range values listed are 3, 4 and 5, all the following ranges are contemplated: 1-3, 1-4, 1-5, 2-3, 2-4, and 2-6. In the present application, unless otherwise specified, a numerical range "a-b" represents an abbreviated representation of any combination of real numbers between a and b, where both a and b are real numbers. For example, a numerical range "0-5" means that all real numbers between "0-5" have been listed herein, and "0-5" is just an abbreviated representation of a combination of these numerical values. In addition, when a certain parameter is expressed as an integer ≥2, it is equivalent to disclosing that the parameter is, for example, an integer of 2, 3, 4, 5, 6, 7, 8, 9, 10, 11, 12, or the like.

Unless otherwise specified, all embodiments and optional embodiments of the present application may be combined with each other to form a new technical solution.

Unless otherwise specified, all technical features and optional technical features of the present application may be combined with each other to form a new technical solution.

Unless otherwise specified, all steps of the present application may be performed sequentially or randomly, but preferably, performed sequentially. For example, a method includes steps (a) and (b), which means that the method may include steps (a) and (b) performed sequentially, or steps (b) and (a) performed sequentially. For example, the method mentioned may further include step (c), which means that step (c) may be added to the method in any order, for example, the method may include steps (a), (b) and (c), steps (a), (c) and (b), steps (c), (a) and (b), or the like.

Unless otherwise specified, "comprising" and "containing" mentioned in the present application are open-ended or closed-ended. For example, the "comprising" and "containing" may mean that other components that are not listed may further be comprised or contained, or only listed components may be comprised or contained.

In the present application, unless otherwise specified, the term "or" is inclusive. For example, the phrase "A or B" means "A, B or both A and B". More particularly, a condition "A or B" is satisfied by any one of the following: A is true (or present) and B is false (or not present); A is false (or not present) and B is true (or present); or both A and B are true (or present).

At present, a nickel cobalt lithium manganese ternary material with a secondary spherical structure has better low-temperature performance due to its small primary particle; however, at a high voltage (≥4.3V), the secondary spherical particle is prone to cracking, resulting in a rapid drop in capacity. In contrast, the single-crystalline-structured nickel cobalt lithium manganese ternary material is more suitable for high voltage applications due to the characteristics of being not easy to crack, and tends to have low-temperature performance worse than that of the secondary sphere of the ternary material due to its large primary particle. Moreover, the cobalt content in the commercially available nickel cobalt lithium manganese ternary material is relatively high, because it is beneficial to reduce the Li/Ni disorder of the surface layer of the positive active material and accelerate the deintercalation rate of lithium ions, thereby further improving the dynamic performance of the single-crystalline low-cobalt ternary positive material. But the cost is too high due to the high price of Co.

In order to solve the foregoing technical problem, the inventor has developed, by modifying a single-crystalline-structured nickel cobalt lithium manganese ternary material, a single-crystalline low-cobalt ternary positive material with low cost and capable of improving cycle performance and power of a battery at low temperature and high voltage.

### Low-Cobalt Ternary Positive Material

In a first aspect of the present application, a single-crystalline-structured low-cobalt ternary positive material is provided, where
a chemical formula of the single-crystalline low-cobalt ternary positive material is Li₁₊ₓ(NiₐCo_{b}Mn_{c})_{1-d}M_{d}O_{2-y}A_{y}, where M is one or more selected from Zr, Sr, B, Ti, Mg, Sn, and Al, A is one or more selected from S, N, F, Cl, Br and I, 0 ≤ x ≤ 0.5, 0.05 ≤ b ≤ 0.14, 3.5≤ a/b ≤ 15, 0.02≤ b×c/a ²≤ 0.21, a+b+c = 1, 0 ≤ d ≤ 0.1, 0 ≤ y < 0.2; and
in a single particle of the single-crystalline low-cobalt ternary positive material, a ratio of an average Co content per unit area of an outer layer to an average Co content per unit area of an inner core on a cross section passing through a geometric center of the particle is in a range of 1.2-5.0:1, optionally, in a range of 1.4-2.0:1, where the outer layer is a region from a surface of the particle to a depth of 200 nm towards the geometric center of the particle, and the inner core is a spherical region with a diameter of 200 nm centered on the geometric center of the particle. Further, the material particle has a radius of at least 300 nm, optionally, 400 to 4000 nm.

In the present application, the low-cobalt ternary positive material is of a single crystal structure. In the field of lithium-ion batteries, single crystal refers to the morphology of a particle, which is usually in the form of monolithic particle (micron-sized) dispersion, and has fewer grain boundaries; however, the secondary spherical particle is usually formed by agglomeration of many particles (100-500 nm) to form a spherical shape and has a large number of grain boundaries. The single-crystalline ternary positive material is a powder with monodisperse primary particles as the main body, and the monodisperse primary particle means that these primary particles are separated and independent from each other. More importantly, the single-crystalline-structured ternary positive material is suitable for high voltage (≥ 4.3V) and has the advantage of high energy density and is not easy to crack, not being possessed by the polycrystalline secondary sphere ternary material.

In the present application, "unit area" refers to an area of the same size in the outer layer and the inner core, usually 1 square nanometer, which can also be selected according to actual test conditions.

In the present application, the Co content refers to in a single particle of a single-crystalline low-cobalt ternary material, a percentage of a mass of Co element contained in a unit area to a total mass of the single-crystalline low-cobalt ternary material on a cross section passing through the geometric center of the single particle.

In the chemical formula of the low-cobalt ternary positive material, the ratio of the mole fraction of Li to the total mole fraction of Ni, Co, and Mn is in the range of (1.67-1):1, optionally, in the range of (1.10-1.01):1. This is because when the sintering temperature is high, excess lithium needs to be provided for compensation; moreover, the molar ratio within this range is conducive to obtaining a single-crystalline material with higher specific energy.

The mole fraction of Co is 0.05 ≤ b ≤ 0.14, which is lower than the Co content (at least 0.15) of commercially available common ternary material products (such as NCM333 or NCM523). Therefore, the single-crystalline low-cobalt ternary material of the present application reduces the amount of cobalt used, thereby reducing the product cost.

The mole fractions of Ni, Co and Mn should satisfy the following relationships: 3.5≤ a/b ≤ 15, 0.02≤ b×c/a² ≤ 0.21, which is beneficial to obtain the low-cobalt ternary single crystal material with a stable crystal structure.

Optionally, when an element M is present in the single-crystalline low-cobalt positive material of the present application, a mole fraction of the element M is not greater than 0.1, optionally, in the range of 0.001 to 0.005, which is beneficial to more effectively stabilize the structure of the positive active material, improve the transport performance of lithium ions in the particle of the positive active material, thereby improving the cycle performance of the battery.

Optionally, when an element A is present in the single-crystalline low-cobalt positive material of the present application, a mole fraction of the element A is not greater than 0.2, and the structural stability of the positive active material is further improved by adding the element A with strong electronegativity to the positive active material, which is beneficial to improve the cycle performance of the battery.

Surprisingly, the inventor found that for the single-crystalline low-cobalt ternary material satisfying the foregoing relational expression, if the Co element is unevenly distributed, especially a ratio of the Co content in a unit area in the outer layer and the inner core is in the range of 1.2-5.0:1, optionally, in the range of 1.4-2.0: 1, a structurally stable low-cobalt ternary positive material at low temperature and high voltage can be obtained, thereby improving the cycle performance and power of the secondary battery at low temperature and high voltage.

In some embodiments, the particle of the low-cobalt ternary positive material has a coating layer, and the coating layer is an oxide containing Q, wherein Q is one or more selected from Zr, Sr, B, Ti, Mg, Sn, and Al. Further, a thickness of the coating layer is 3-100 nm, optionally, 10-180 nm.

The single-crystalline low-cobalt ternary positive active material of the present application may be an active substance particle or a particle composed of the active substance particles and a coating layer coated thereon, and the coating layer is a coating layer selected from oxides containing the element Q.

By coating the coating layer with the oxide containing the element Q on the surface of the active substance particles, it is beneficial to reduce the oxidation activity of the electrolytic solution on the surface of the positive active material, reduce side reactions of the electrolytic solution on the surface of the positive active material, suppress gas production, and reduce heat generation, thereby improving the stability and safety performance of the battery.

In the present application, the surface refers to an interface where a body (for example, the active substance particle) is in contact with the outside (for example, air, water, or an electrolytic solution).

In some embodiments, in the chemical formula of the low-cobalt ternary positive material, 0.5 ≤ a ≤ 0.7.

This is beneficial to make the low-cobalt ternary positive material have higher specific capacity and maintain better chemical stability at high voltage.

In some embodiments, the low-cobalt ternary positive material has a median particle size Dv₅₀ in a range of 1.6µm-3.6µm, optionally, in a range of 1.8 m-3.5µm. Further optionally, Dv₁₀ is in a range of 0.9µm-1.1µm, for example, 1.0µm; Dv₃₀ is in a range of 1.4µm-1.6µm, for example, 1.5µm; and Dv₆₀ is in a range of 2.4µm-2.6µm, for example, 2.5µm.

As a result, the deintercalation ability of lithium ions can be improved, the deintercalation rate of lithium ions can be accelerated, and the electrochemical performance of the battery at low temperature can be improved.

In some embodiments, based on an element Q in the oxide containing Q relative to the low-cobalt ternary positive material having a coating layer, a content of the Q in the coating layer of the low-cobalt ternary positive material is 500-5000 ppm.

This is not only beneficial to improve the structural stability of the positive active material and reduce gas and heat production, but also beneficial to enable the positive active material have higher rate performance, power performance, and capacity performance.

In a second aspect of the present application, a method for preparing a low-cobalt ternary positive material is provided, including:
step S1: mixing and sintering a positive active material precursor, a lithium salt, and an M-containing compound and performing crushing to obtain an active substance particle precursor 1, where a chemical formula of the positive active material precursor is NiₐCo_{b}Mn_{c}(OH)₂, where 0.05 ≤ b ≤ 0.14, 3.5≤ a/b ≤ 15, 0.02≤ b×c/a² ≤ 0.21, a+b+c = 1; 0.5≤ a ≤ 0.7; and
step S2: mixing and sintering the active substance particle precursor 1 and a Co-containing compound to obtain an active substance particle precursor 2 with a surface layer rich in Co; performing tempering to obtain a low-cobalt ternary positive material;
where the low-cobalt ternary positive material is of a single crystal structure, and
a chemical formula of the low-cobalt ternary positive material is Li₁₊ₓ(NiₐCo_{b}Mn_{c})_{1-d}M_{d}O_{2-y}A_{y}, where M is one or more selected from Zr, Sr, B, Ti, Mg, Sn, and Al, A is one or more selected from S, N, F, Cl, Br and I, 0 ≤ x ≤ 0.5, 0.05 ≤ b ≤ 0.14, 3.5≤ a/b ≤ 15, 0.02≤ b×c/a²≤ 0.21, a+b+c=1, 0 ≤ d ≤ 0.1, 0 ≤ y ≤ 0.2; and
in a single particle of the single-crystalline low-cobalt ternary positive material, a ratio of an average Co content per unit area of an outer layer to an average Co content per unit area of an inner core on a cross section passing through a geometric center of the particle is in a range of 1.2-5.0: 1, optionally, in a range of 1.4-2.0:1, where the outer layer is a region from a surface of the particle to a depth of 200 nm towards the geometric center of the particle, and the inner core is a spherical region with a diameter of 200 nm centered on the geometric center of the particle. Further, the material particle has a radius of at least 300 nm, optionally, 400 to 4000 nm.

The positive active material provided in the embodiment of the present application has the advantages of simple preparation process, easy realization, and low cost, and may be applied in large-scale industrial production.

### Step S1

In step S1, the positive active material precursor may be prepared by a co-precipitation method, a gel method or a solid phase method. As an example, the method for preparing the positive active material precursor includes the following steps:
S110, dispersing a Ni source, a Co source and a Mn source in a solvent according to a stoichiometric ratio to obtain a mixed solution; and
S120, adjusting the pH of the mixed solution, and performing a reaction at a preset temperature under stirring, where an inert gas may be introduced for protection during the reaction; and after the reaction is completed, separating, washing, and drying are performed to obtain a positive active material precursor, the chemical formula thereof is [NiₐCo_{b}Mn_{c}](OH)₂ .

In step S110, the Ni source is a soluble nickel salt. The specific type of the nickel salt is not particularly limited and may be selected according to actual needs. As an example, the nickel salt is selected from nickel sulfate, nickel nitrate, nickel chloride, nickel oxalate, or nickel acetate, and any mixture thereof, optionally, selected from nickel sulfate and/or nickel nitrate, and further optionally, nickel sulfate.

In step S110, the Co source is a soluble cobalt salt. The specific type of the cobalt salt is not particularly limited and may be selected according to actual needs. As an example, the cobalt salt is selected from cobalt sulfate, cobalt nitrate, cobalt chloride, cobalt oxalate, or cobalt acetate, and any mixture thereof, optionally, selected from cobalt sulfate and/or cobalt nitrate, and further optionally, cobalt sulfate.

In step S110, the Mn source is a soluble manganese salt. The specific type of the manganese salt is not particularly limited and may be selected according to actual needs. As an example, the manganese salt is selected from manganese sulfate, manganese nitrate, manganese chloride, manganese oxalate, or manganese acetate, and any mixture thereof, optionally, selected from manganese sulfate and/or manganese nitrate, and further optionally, manganese sulfate.

In step S110, the molar ratio of the substances the Ni source, the Co source, and the Mn source added is 1:(0.04-0.4):(0.2-0.7), optionally, 1:(0.05-0.3):(0.25-0.65). The foregoing solvent is not particularly limited as long as it can dissolve the Ni source, the Co source, and the Mn source. As an example, the solvent is selected from water, methanol, ethanol, acetone, isopropanol, or n-hexanol, and any mixed solvent thereof, where the water may be one or more of deionized water, distilled water, mineral water, and tap water, for example, deionized water.

In step S110, the concentration of the mixed solution is not particularly limited and may be adjusted according to actual needs. The mixed solution is an aqueous solution containing nickel, cobalt, and manganese ions, and may generally be selected from an aqueous solution of nickel sulfate, manganese sulfate, and cobalt sulfate. As an example, the concentration of the mixed solution is 1.5 mol/L-3.5 mol/L, for example, 2.0 mol/L-2.9 mol/L. The concentration of the Co source in the mixed solution is 0.05-1.0 mol/L, optionally, 0.06-0.6 mol/L.

In step S120, a reaction system may be formed by adding a precipitating agent and a complexing agent to the mixed solution, the concentration of the complexing agent and the concentration of the precipitating agent in the reaction system are adjusted, and the pH of the reaction system is adjusted to 10-12, to perform a co-precipitation reaction, so as to obtain a positive active material precursor such as [NiₐCo_{b}Mn_{c}](OH)₂.

In step S120, the precipitating agent may be one or more of LiOH, NaOH, and KOH, for example, NaOH. Further, the precipitating agent is in the form of a solution, where the solvent may be one or more of water, methanol, ethanol, acetone, isopropanol, and n-hexanol, and the foregoing water may be one or more of deionized water, distilled water, mineral water, and tap water, for example, deionized water. The concentration of the precipitant solution is not particularly limited and may be selected according to actual needs. Optionally, the concentration of NaOH is 0.5-5 mol/L, for example, 1 mol/L.

In step S120, the complexing agent may be one or more of ammonia water, ammonium sulfate, ammonium nitrate, ammonium chloride, ammonium citrate, and disodium ethylenediaminetetraacetate (EDTA). Further, the complexing agent is in the form of a solution, where the solvent may be one or more of water, methanol, ethanol, acetone, isopropanol, and n-hexanol, and the foregoing water may be one or more of deionized water, distilled water, mineral water, and tap water, for example, deionized water.

Optionally, the complexing agent is ammonia water, and the concentration of ammonia water is not particularly limited and may be selected according to actual needs. Optionally, the concentration of ammonia water is 0.1 mol/L-2 mol/L, further is 0.2 mol/L-1.5 mol/L, still further is 0.3 mol/L-1 mol/L, for example, 0.4 mol/L.

Further, the reaction temperature is 40 °C-70 °C, further 45 °C-65 °C, and still further 50 °C-60 °C.

In step S120, the reaction is carried out in a protective atmosphere of inert gas and under continuous stirring. The inert gas is, for example, one or more selected from nitrogen, argon, and helium. The manner of stirring is not particularly limited as long as the reaction system can be stirred uniformly. For example, mechanical stirring is selected. The stirring speed is, for example, 100 rpm-800 rpm. The "rpm" means revolutions per minute, and represents the number of revolutions per minute of a stirring device.

When the co-precipitation reaction product is washed, the selected washing agent is not particularly limited and may be selected according to actual needs, for example, it is washed with deionized water, where the number of times of washing is not particularly limited as long as residual ions on the surface of the reaction product can be washed away.

When the co-precipitation reaction product is dried after being washed, the drying temperature and manner are not particularly limited and may be selected according to actual needs. For example, the drying temperature is 100 °C-150 °C.

In step S1, the lithium salt is selected from lithium oxide (Li₂O), lithium phosphate (Li₃PO₄), lithium dihydrogen phosphate (LiH₂PO₄), lithium acetate (CH₃COOLi), lithium hydroxide (LiOH), lithium carbonate (Li₂CO₃) or lithium nitrate (LiNO₃), and any mixture thereof. Optionally, the lithium salt is selected from lithium carbonate, lithium hydroxide, or lithium nitrate, and any mixtures thereof. Further optionally, the lithium salt is lithium carbonate.

In step S1, the M-containing compound may be selected from one or more of an oxide containing an element M, a nitric acid compound, a carbonic acid compound, a hydroxide compound, and an acetic acid compound. For example, the M-containing compound is the oxide containing the element M that is one or more selected from magnesium oxide, strontium oxide, titanium oxide, tin oxide, zirconium oxide, aluminum oxide, and boron oxide; optionally, one or more selected from magnesium oxide, strontium oxide, titanium oxide, zirconium oxide, aluminum oxide, and boron oxide; further optionally, one or more selected from strontium oxide, titanium oxide, zirconium oxide, aluminum oxide, and boron oxide; and yet further optionally, one or more selected from zirconium oxide, strontium oxide, and boron oxide.

Optionally, when an active substance particle not containing a doping element M or containing a doping element M is prepared, the positive active material precursor and the lithium salt are added in such an amount that a ratio of a total molar amount of metal elements (Ni, Co, Mn) to a molar amount of Li element in the lithium salt is Me:Li = 1:(0.99-1.2), optionally, Me:Li = 1:(1-1.2), further optionally, Me:Li = 1:(1.02-1.10), where Me is the sum of the molar amounts of the metal elements in the positive active material precursor, that is, Me = Ni+Co+Mn.

Optionally, when an active substance particle containing a doping element M is prepared, the positive active material precursor and the M-containing compound are added in such an amount that a ratio of a total molar amount of metal elements (Ni, Co, Mn) in the positive active material precursor to a molar amount of the element M in the M-containing compound is Me:M = 1:(0.001-0.005), optionally, Me:M = 1:(0.0015-0.003), where Me is the sum of the molar amounts of the metal elements in the positive active material precursor, that is, Me = Ni+Co+Mn.

In step S1, the active substance particle not containing the doping element M may be obtained by mixing the positive active material precursor and the lithium salt and performing sintering treatment. Alternatively, the active substance particle modified by M at a transition metal site may be obtained by mixing the positive active material precursor and the lithium salt with the M-containing compound and performing sintering treatment. Alternatively, the active substance particle modified by M at a transition metal site and doped with an element A at an oxygen site may be obtained by mixing the positive active material precursor and lithium salt with the M-containing compound and an A-containing compound and performing sintering treatment.

The A-containing compound may be selected according to actual needs, for example, is one or more selected from ammonium fluoride, lithium fluoride, hydrogen fluoride, ammonium chloride, lithium chloride, hydrogen chloride, ammonium bromide, lithium bromide, hydrogen bromide, ammonium iodide, lithium iodide, hydrogen iodide, hydrogen sulfide, lithium sulfide, and ammonium sulfide.

Further, in step S1, sintering is performed in oxygen or air; a sintering temperature is in a range of 800 °C to 960 °C. The sintering time is not particularly limited and may be adjusted according to the actual situation, for example, 5 hrs-15 hrs. The sintering temperature is relatively high, which is conducive to the fusion between particles and increases the particle size of the particle.

In step S1, the manner of crushing is not particularly limited and may be selected according to actual needs, for example, a jet mill or a mechanical mill is used. Optionally, a jet mill is used, for example, a Jet Mill from SARI POWDER (with a volume of 40 m³), the pulverization air pressure is set to 0.2-0.35 MPa, the feeding speed is at 280-320 Kg/h, and the feeding particle size is controlled within 2 mm. The crushing operation is beneficial to further break down the particles, thereby controlling the particle size within the desired range.

Upon the sintering and crushing in step S1, the obtained active substance particle precursor 1 has a median particle size of 1.4 µm-3.4µm, optionally, 1.6µm-3.5µm.

### Step S2

In some embodiments, the step S2 further includes step S2a: coating the active substance particle precursor 2 with the surface layer rich in Co with an oxide containing Q.

The positive active material obtained by the method including step S2a includes an active substance particle and an M element-containing coating layer coated on the surface of the active substance particle. Through the coating layer, the contact between the active substance particle and the electrolytic solution in the secondary battery may be avoided, so as to ensure the stability of the structure of the positive active material.

In some embodiments, the oxide containing Q in the step S2a is one or more selected from aluminum oxide, tin oxide, zirconium oxide, boron oxide, and titanium oxide, optionally, titanium oxide.

The coating treatment may be performed using the method and device known in the art, such as dry coating, liquid phase coating, vapor deposition phase coating, or the like.

Thus, a single-crystalline low-cobalt positive active material having a coating layer is obtained, which can avoid the contact with the electrolytic solution in the secondary battery and stabilize the structure of the single-crystalline low-cobalt positive active material.

In some embodiments, the Co-containing compound in the step S2 is one or more selected from cobalt hydroxide, cobalt oxyhydroxide, cobalt oxide, cobalt acetate, or cobalt oxalate.

In some embodiments, the step S2, the Co-containing compound is added in such an amount that a ratio of a molar amount of the Co added thereto to a total molar amount of the metal elements Ni, Co, Mn in the positive active material precursor obtained in the step S1 is 0.005-0.05:1, optionally, 0.01-0.03:1.

In some embodiments, in the step S2, a sintering temperature in the step S2 is in a range of 650-750 °C, optionally, in a range of 700-720 °C, and a sintering time is 2-8 hrs, optionally, 4-5 hrs, and a sintering atmosphere is air or O₂.

This is conducive to diffusion of Co element on the surface into the particle, so as to realize the uneven distribution of Co element in a single particle of the low-cobalt ternary positive material, especially a ratio of an average Co content in a unit area in the outer layer to an average Co content in a unit area in the inner core is in a range of 1.2-5.0:1, optionally, in a range of 1.4-2.0:1.

Further, in the step S2, a temperature of the tempering treatment is 400 °C-700 °C, optionally, 450 °C-600 °C.

### Secondary Battery

In addition, a secondary battery, a battery module, a battery pack, and a power consumption apparatus of the present application will be described below with reference to the accompanying drawings as appropriate.

In one embodiment of the present application, a secondary battery is provided, including a positive electrode sheet using the single-crystalline low-cobalt positive active material of the present application.

Generally, a secondary battery includes a positive electrode sheet, a negative electrode sheet, an electrolyte, and a separator. During charging and discharging of a battery, active ions are intercalated and deintercalated back and forth between the positive electrode sheet and the negative electrode sheet. The electrolyte plays a role of conducting ions between the positive electrode sheet and the negative electrode sheet. The separator is disposed between the positive electrode sheet and the negative electrode sheet, which mainly plays the role of preventing a short circuit between the positive and negative electrodes while allowing ions to pass through.

### [Positive Electrode Sheet]

A positive electrode sheet includes a positive electrode current collector and a positive film layer provided on at least one surface of the positive electrode current collector, and the positive electrode film layer includes the positive active material of the first aspect of the present application.

As an example, the positive electrode current collector has two surfaces opposite in its own thickness direction, and the positive film layer is provided on either or both of the two opposite surfaces of the positive electrode current collector.

In some embodiments, the positive electrode current collector may be metal foil or a composite current collector. For example, as the metal foil, aluminum foil can be used. The composite current collector may include a polymer material base layer and a metal layer formed on at least one surface of the polymer material base layer. The composite current collector may be formed by synthesizing a metal material (aluminum, aluminum alloy, nickel, nickel alloy, titanium, titanium alloy, silver and silver alloy, or the like) on a polymer material substrate (such as a substrate of polypropylene (PP), polyethylene glycol terephthalate (PET), polybutylene terephthalate (PBT), polystyrene (PS), polyethylene (PE), or the like).

In some embodiments, the positive film layer further optionally includes a binder. As an example, the binder may include at least one of a polyvinylidene fluoride (PVDF), a polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer, and fluorine-containing acrylate resin.

In some embodiments, the positive film layer further optionally includes a conductive agent. As an example, the conductive agent may include at least one of superconducting carbon, acetylene black, carbon black, Ketjen black, carbon dots, carbon nanotubes, graphene, and carbon nanofibers.

In some embodiments, the positive electrode sheet may be prepared in the following manner. The foregoing components for preparing the positive electrode sheet such as the positive active material, the conductive agent, the binder, and any other components are dispersed in a solvent (such as N-methylpyrrolidone), to form a positive electrode slurry, the positive electrode slurry is coated on the positive electrode current collector, and then after drying, cold pressing and other processes, a positive electrode sheet may be obtained.

### [Negative Electrode Sheet]

A negative electrode sheet includes a negative electrode current collector and a negative film layer provided on at least one surface of the negative electrode current collector, and the negative film layer includes a negative active material.

As an example, the negative electrode current collector has two surfaces opposite in its own thickness direction, and the negative film layer is provided on either or both of the two opposite surfaces of the negative electrode current collector.

In some embodiments, the negative electrode current collector may be metal foil or a composite current collector. For example, as the metal foil, copper foil may be used. The composite current collector may include a polymer material base layer and a metal layer formed on at least one surface of the polymer material base material. The composite current collector may be formed by synthesizing a metal material (copper, copper alloy, nickel, nickel alloy, titanium, titanium alloy, silver and silver alloy, or the like) on a polymer material substrate (such as a substrate of polypropylene (PP), polyethylene glycol terephthalate (PET), polybutylene terephthalate (PBT), polystyrene (PS), polyethylene (PE), or the like).

In some embodiments, the negative active material may employ a negative active material for a battery known in the art. As an example, the negative active material may include at least one of artificial graphite, natural graphite, soft carbon, hard carbon, silicon-based materials, tin-based materials, lithium titanate, or the like. The silicon-based material may be selected from at least one of elemental silicon, silicon-oxygen compounds, silicon-carbon composites, silicon-nitrogen composites, and silicon alloys. The tin-based material may be selected from at least one of elemental tin, tin oxide compounds, and tin alloys. However, the present application is not limited to these materials, and other conventional materials that can be used as a negative active material for a battery may also be used. One type of these negative active materials may be used alone, or two or more types thereof may be used in combination.

In some embodiments, the negative film layer further optionally includes a binder. The binder may be selected from at least one of styrene-butadiene rubber (SBR), polyacrylic acid (PAA), polyacrylate sodium (PAAS), polyacrylamide (PAM), polyvinyl alcohol (PVA), sodium alginate (SA), polymethacrylic acid (PMAA), and carboxymethyl chitosan (CMCS).

In some embodiments, the negative film layer further optionally includes a conductive agent. The conductive agent may be selected from at least one of superconducting carbon, acetylene black, carbon black, Ketjen black, carbon dots, carbon nanotubes, graphene, and carbon nanofibers.

In some embodiments, the negative film layer further optionally includes other promoters, for example, thickening agents (such as sodium carboxymethyl cellulose (CMC-Na)), or the like.

In some embodiments, the negative electrode sheet may be prepared in the following manner. The foregoing components for preparing the negative electrode sheet such as the negative active material, the conductive agent, the binder, and any other components are dispersed in a solvent (such as deionized water), to form a negative electrode slurry, the negative electrode slurry is coated on the negative electrode current collector, and then after drying, cold pressing and other processes, a negative electrode sheet may be obtained.

### [Electrolyte]

The electrolyte plays the role of conducting ions between the positive electrode sheet and the negative electrode sheet. The type of the electrolyte is not specifically limited in the present application, and may be selected according to needs. For example, the electrolyte may be in a liquid state, gel state, or all solid state.

In some embodiments, the electrolyte is an electrolytic solution. The electrolytic solution includes an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bisfluorosulfonimide, lithium bistrifluoromethanesulfonimide, lithium trifluoromethanesulfonate, lithium difluorophosphate, lithium difluorooxalateborate, lithium bisoxalateborate, lithium difluorobisoxalate phosphate, and lithium tetrafluorooxalate phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethylene propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, ethyl methyl sulfone, and diethyl sulfone.

In some embodiments, the electrolytic solution further optionally includes an additive. For example, the additive may include a negative electrode film-forming additive, a positive electrode film-forming additive, and an additive capable of improving specific performance of the battery, for example, an additive for improving overcharge performance of the battery, or an additive for improving high-temperature or low-temperature performance of the battery, or the like.

### [Separator]

In some embodiments, a separator is further included in the secondary battery. The type of the separator is not particularly limited in the present application, and any well-known porous structure separator with good chemical stability and mechanical stability may be selected.

In some embodiments, the material of the separator may be selected from at least one of glass fiber, non-woven fabric, polyethylene, polypropylene, and polyvinylidene difluoride. The separator may be a single-layer film or a multi-layer composite film, which is not particularly limited. When the separator is a multi-layer composite film, the materials of each layer may be the same or different, which is not particularly limited.

In some embodiments, the positive electrode sheet, the negative electrode sheet, and the separator may be subject to a winding process or a lamination process, to obtain an electrode assembly.

In some embodiments, the secondary battery may include an outer package. The outer package may be used to package the foregoing electrode assembly and electrolyte.

In some embodiments, the outer package of the secondary battery may be a hard shell such as a hard plastic shell, an aluminum shell, or a steel shell. In some embodiments, the outer package of the battery cell may be a soft package, such as a bag-type soft package. A material of the soft package may be plastic, for example, polypropylene, polybutylene terephthalate, and polybutylene succinate.

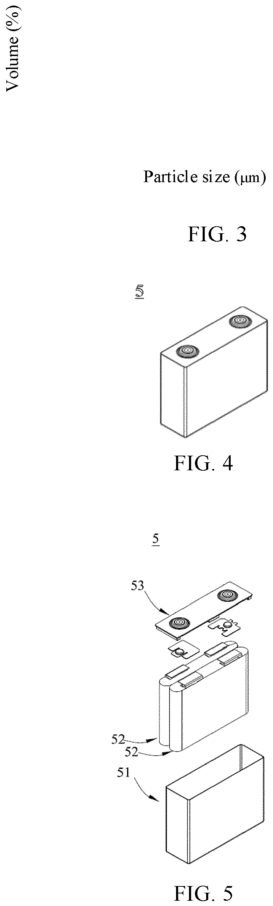

The present application has no particular limitation on the shape of the secondary battery, which may be a cylinder, a square, or any other shape. For example, FIG. 4 shows a secondary battery 5 of a square structure as an example.

In some embodiments, referring to FIG. 5, the outer package may include a housing 51 and a cover plate 53. The housing 51 may include a bottom plate and a side plate connected to the bottom plate. The bottom plate and the side plate are enclosed to form an accommodating cavity. The housing 51 has an opening communicating with the accommodating cavity, and the cover plate 53 can cover the opening to close the accommodating cavity. A positive electrode sheet, a negative electrode sheet, and a separator may be subject to a winding process or a lamination process to form an electrode assembly 52. The electrode assembly 52 is packaged in the accommodating cavity. The electrolytic solution is infiltrated in the electrode assembly 52. The number of electrode assemblies 52 included in the secondary battery 5 may be one or more, and the specific number may be selected by persons skilled in the art according to specific actual needs.

In some embodiments, secondary batteries may be assembled into a battery module, and the number of secondary batteries included in the battery module may include one or more, and the specific number may be selected by persons skilled in the art according to application and capacity of the battery module.

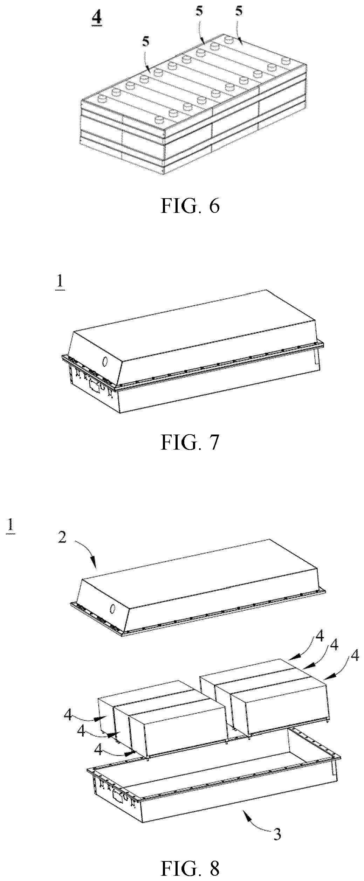

FIG. 6 shows a battery module 4 as an example. Referring to FIG. 6, in the battery module 4, a plurality of secondary batteries 5 may be sequentially arranged along a length direction of the battery module 4. Certainly, they may be arranged in accordance with any other manner. Further, the plurality of secondary batteries 5 may be fixed by using fasteners.

Optionally, the battery module 4 may further include a shell with an accommodating space, and the plurality of secondary batteries 5 are accommodated in the accommodating space.

In some embodiments, battery modules may be further assembled into a battery pack, and the number of battery modules included in the battery pack may be one or more, and the specific number may be selected by persons skilled in the art according to application and capacity of the battery pack.

FIG. 7 and FIG. 8 show a battery pack 1 as an example. Referring to FIG. 7 and FIG. 8, the battery pack 1 may include a battery box and a plurality of battery modules 4 disposed in the battery box. The battery box includes an upper box 2 and a lower box 3. The upper box 2 can cover the lower box 3 and form an enclosed space for accommodating the battery modules 4. The plurality of battery modules 4 may be arranged in the battery box in any manner.

In addition, the present application also provides a power consumption apparatus including at least one of a secondary battery, a battery module, or a battery pack provided in the present application. The secondary battery, battery module, or battery pack may be used as a power source for the power consumption apparatus as well as an energy storage unit for the power consumption apparatus. The power consumption apparatus may include a mobile device (for example, a mobile phone, a notebook computer), an electric vehicle (for example, a pure electric vehicle, a hybrid electric vehicle, a plug-in hybrid electric vehicle, an electric bicycle, an electric scooter, an electric golf cart, an electric truck), an electric train, a ship and a satellite, an energy storage system, or the like, but is not limited to this.

As the power consumption apparatus, a secondary battery, a battery module, or a battery pack may be selected according to usage requirements.

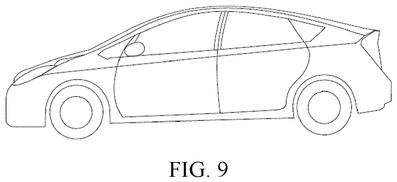

FIG. 9 shows a power consumption apparatus as an example. The power consumption apparatus is a pure electric vehicle, a hybrid electric vehicle, a plug-in hybrid electric vehicle, or the like. To meet a requirement of the power consumption apparatus for high power and high energy density of a secondary battery, a battery pack or a battery module may be used.

In another example, the apparatus may be a mobile phone, a tablet computer, a notebook computer, or the like. The apparatus usually requires lightness and thinness, and a secondary battery may be used as a power source.

### EXAMPLES

Hereinafter, examples of the present application will be described. The examples described below are illustrative, only used to explain the present application, and should not be construed as a limitation to the present application. Where specific techniques or conditions are not specified in the examples, they are performed according to techniques or conditions described in the literature in the art or according to product specifications. The reagents or instruments used without specifying the manufacturer are conventional products that can be obtained from the market.

### 1. Preparation of Example

### [Preparation of Positive Active Material]

### Example 1

### 1) Preparation of Positive Active Material Precursor

Nickel sulfate, manganese sulfate, and cobalt sulfate were added to deionized water to formulate a mixed solution, where a molar ratio of nickel element, cobalt element, and manganese element is Ni:Co:Mn = 55.6:11:33.4; 0.4 mol/L of ammonia water and 1 mol/L of sodium hydroxide aqueous solution were added to the mixed solution, the pH of the reaction system was adjusted to 11.3, a reaction was performed at 40°C and a stirring speed of 600 rpm, and the inert gas nitrogen was introduced in the reaction process for protection. After the reaction was completed, the solid phase product was washed with deionized water, and dried at 100 °C after the completion of washing, to obtain a positive active material precursor Ni_{0.556}Co_{0.11}Mn_{0.334}(OH)₂.

### 2) Preparation of Active Substance Particle Precursor 1

Lithium carbonate Li₂CO₃, the positive active material precursor Ni_{0.556}Co_{0.11}Mn_{0.334}(OH)₂ and zirconium oxide ZrO₂ were mixed, and then mechanical mixing was performed. Based on a total molar amount (nickel element, cobalt element, and manganese element, that is, Me = Ni+Co+Mn) of metal elements of the positive active material precursor, lithium carbonate was added in such an amount that a ratio of a molar amount of lithium element to the molar amount of Me is Li:Me = 1.06:1; and the zirconium oxide was added in such an amount that a ratio of a molar amount of zirconium element to the molar amount of Me is Zr:Me = 2.031 × 10⁻³:1.

The mixed material was put into a tube furnace, and was sintered for 13hrs by heating up to 940 °C at 5 °C/min in an air atmosphere, and cooled to room temperature together with the furnace; and then 2 mm particles were crushed in a jet mill (SARI POWDER (40 m³)) at a crushing air pressure of 0. 35 MPa and a feeding rate of 300 Kg/h, to obtain an active substance particle precursor 1.

### 3) Preparation of Active Substance Particle Precursor 2

Cobalt hydroxide was added to the active substance particle precursor 1 obtained above; based on a total molar amount (nickel element, cobalt element, and manganese element, that is, Me = Ni+Co+Mn) of metal elements of the positive active material precursor, cobalt hydroxide was added in such an amount that a ratio of a molar amount of cobalt element to the molar amount of Me is 1.14 × 10⁻²:1; after thorough mixing, the mixture was sintered for 5hrs by heating up to 700 °C at 5 °C/min in an air atmosphere, and then cooled to room temperature together with the furnace, to obtain an active substance particle precursor 2.

### 4) Preparation of Active Substance Particle Precursor Having Coating Layer

Titanium oxide TiO₂ was added to the active substance particle precursor 2, based on the total molar amount of metal elements (nickel element, cobalt element, and manganese element, that is, Me = Ni+Co+Mn) in the positive active material precursor, titanium oxide was added in such an amount that a ratio of the molar amount of the titanium element to the molar amount of Me is 2.031 × 10⁻³:1; and after thorough mixing, an active substance particle precursor 2 with a titanium oxide coating layer was obtained.

### 5) Preparation of Low-Cobalt Positive Active Material

The obtained active substance particle precursor with the titanium oxide coating layer was subjected to tempering treatment, a temperature of the tempering treatment was 500 °C and a time thereof was 5 hrs, and a positive active material CA1 was obtained, where a molecular formula of the active substance particle is Li_{1.03}(Ni_{0.55}Co_{0.12}Mn_{0.33})_{0.996}Zr_{0.002}Ti_{0.002}O₂.

### Example 2

Similar to Example 1, the difference is that step 4) is not included in this preparation process.

### Example 3

Similar to Example 1, the difference is that in step 2), the mixed material was placed in a tube furnace, and was sintered for 13hrs by heating up to 960 °C at 5 °C/min in an air atmosphere.

### Example 4

Similar to Example 1, the difference lies in the following preparation processes.

### 1) Preparation of Positive Active Material Precursor

A molar ratio of nickel element, cobalt element, and manganese element is Ni:Co:Mn=60.7:9:30.4, and the positive active material precursor is Ni_{0.607}Co_{0.09}Mn_{0.304}(OH)₂.

### 2) Preparation of Active Substance Particle Precursor 1

Lithium carbonate Li₂CO₃, the positive active material precursor Ni_{0.607}Co_{0.09}Mn_{0.304}(OH)₂, and strontium oxide SrO were mixed, and then mechanical mixing was performed; based on a total molar amount (nickel element, cobalt element, and manganese element, that is, Me = Ni+Co+Mn) of metal elements of the positive active material precursor, strontium oxide was added in such an amount that a ratio of the molar amount of strontium element to the molar amount of Me is Sr:Me = 1.011 × 10⁻³: 1; and the temperature of sintering treatment was 930 °C and the time thereof was 12 hrs.

### 3) Preparation of Active Substance Particle Precursor 2

The active substance particle precursor 1 obtained above was mixed with cobalt hydroxide, and the temperature of sintering treatment was 710 °C and the time thereof was 5 hrs.

The reaction conditions and reaction steps not mentioned are the same as those in Example 1, and the molecular formula of the active substance particle of the positive active material obtained was Li_{1.03}(Ni_{0.6}Co_{0.1}Mn_{0.3})_{0.997}Sr_{0.001}Ti_{0.002}O₂.

### Example 5

Similar to Example 1, the difference lies in the following preparation processes.

### 1) Preparation of Positive Active Material Precursor

Amolar ratio of nickel element, cobalt element, and manganese element was Ni:Co:Mn = 67.6:8:25.6, and the positive active material precursor is Ni_{0.676}Co_{0.08}Mn_{0.256}(OH)₂; and the pH of the reaction system was adjusted to 11.7.

### 2) Preparation of Active Substance Particle Precursor 1

Lithium carbonate Li₂CO₃, the positive active material precursor Ni_{0.607}Co_{0.09}Mn_{0.304}(OH)₂, and magnesium oxide MgO were mixed, and then mechanical mixing was performed; based on a total molar amount (nickel element, cobalt element, and manganese element, that is, Me = Ni+Co+Mn) of metal elements of the positive active material precursor, magnesium oxide was added in such an amount that a ratio of a molar amount of magnesium element to the molar amount of Me is Mg:Me = 2.06 × 10⁻³: 1; and the temperature of sintering treatment was 920 °C and the time thereof was 12 hrs.

### 3) Preparation of Active Substance Particle Precursor 2

Based on a total molar amount of metal elements (nickel element, cobalt element, and manganese element, that is, Me = Ni+Co+Mn) of the positive active material precursor, cobalt hydroxide was added in such an amount that a ratio of the molar amount of cobalt element to the molar amount of Me is 22.36 × 10⁻²: 1 to perform mixing; and the temperature of sintering treatment was 720 °C and the time thereof was 5 hrs.

### 4) Preparation of Active Substance Particle Precursor Having Coating Layer

Titanium oxide TiO₂ was used to perform coating; based on a total molar amount (nickel element, cobalt element, and manganese element, that is, Me = Ni+Co+Mn) of metal elements in the positive active material precursor, titanium oxide was added in such an amount that a ratio of a molar amount of the titanium element to the molar amount of Me is 2.06 × 10⁻³: 1.

The reaction conditions and reaction steps not mentioned are the same as those in Example 1, and the molecular formula of the active substance particle of the positive active material obtained was Li_{1.03}(Ni_{0.65}Co_{0.1}Mn_{0.25})_{0.996}Mg_{0.002}Ti_{0.002}O₂.

### Example 6

Similar to Example 1, the difference lies in the following preparation processes.

### 1) Preparation of Positive Active Material Precursor

A molar ratio of nickel element, cobalt element, and manganese element is Ni:Co:Mn=70.8:9:20.2, and the positive active material precursor is Ni_{0.708}Co_{0.09}Mn_{0.202}(OH)₂.

### 2) Preparation of Active Substance Particle Precursor 1

Lithium carbonate Li₂CO₃, the positive active material precursor Ni_{0.708}Co_{0.09}Mn_{0.202}(OH)₂, and magnesium oxide MgO were mixed, and then mechanical mixing was performed; based on a total molar amount (nickel element, cobalt element, and manganese element, that is, Me = Ni+Co+Mn) of metal elements of the positive active material precursor, magnesium oxide was added in such an amount that a ratio of a molar amount of magnesium element to the molar amount of Me is Mg:Me = 2.031 × 10⁻³: 1; and the temperature of sintering treatment was 920 °C and the time thereof was 11 hrs.

The reaction conditions and reaction steps not mentioned are the same as those in Example 1, and the molecular formula of the active substance particle of the positive active material obtained was Li_{1.03}(Ni_{0.70}Co_{0.10}Mn_{0.2})_{0.996}Mg_{0.002}Ti_{0.002}O₂.

### Example 7

Similar to Example 1, the difference lies in the following preparation processes.

### 1) Preparation of Positive Active Material Precursor

A molar ratio of nickel element, cobalt element, and manganese element is Ni:Co:Mn = 70.7:4:25.3, and the positive active material precursor is Ni_{0.707}Co_{0.04}Mn_{0.253}(OH)₂; and the pH of the reaction system is adjusted to 11.8.

### 2) Preparation of Active Substance Particle Precursor 1

The temperature of sintering treatment was 910 °C, and the time thereof was 14 hrs.

### 3) Preparation of Active Substance Particle Precursor 2

The active substance particle precursor 1 obtained above was mixed with cobalt hydroxide, based on a total molar amount (nickel element, cobalt element, and manganese element, that is, Me = Ni+Co+Mn) of metal elements of the positive active material precursor, cobalt hydroxide was added in such an amount that a ratio of a molar amount of cobalt element to the molar amount of Me is 1.05× 10⁻²: 1; and the temperature of sintering treatment was 700 °C and the time thereof was 4 hrs.

The reaction conditions and reaction steps not mentioned are the same as those in Example 1, and the molecular formula of the active substance particle of the positive active material obtained was Li_{1.03}(Ni_{0.7}C_{0.05}Mn_{0.25})_{0.996}Zr_{0.002}Ti_{0.002}O₂.

### Comparative Example C1

Similar to Example 1, the difference is as follows.

### 1) Preparation of Positive Active Material Precursor

Amolar ratio of nickel element, manganese element, and cobalt element was Ni:Co:Mn = 55: 12:33, and the positive active material precursor is Ni_{0.55}Co_{0.12}Mn_{0.33}(OH)₂; the pH of the reaction system was adjusted to 11.2.

### 2) Preparation of Active Substance Particle Precursor 1

Lithium carbonate Li₂CO₃ and the positive active material precursor Ni_{0.55}Co_{0.12}Mn_{0.33}(OH)₂ were mixed, and then mechanical mixing was performed; based on a total molar amount (nickel element, cobalt element, and manganese element, that is, Me = Ni+Co+Mn) of metal elements of the positive active material precursor, lithium carbonate was added in such an amount that a ratio of a molar amount of lithium element to the molar amount of Me is Li:Me = 1.02: 1.

The mixture was put into a tube furnace, and was sintered for 13 hrs by heating up to 960 °C at 5 °C/min in an air atmosphere, and then cooled to room temperature together with the furnace and crushed.

The compound containing the element M was not added in step 2), and step 3) is not included.

The reaction conditions and reaction steps not mentioned are the same as those in Example 1, and the molecular formula of the active substance particle of the positive active material obtained was Li(Ni_{0.55}Co_{0.12}Mn_{0.33})_{0.998}Ti_{0.002}O₂.

### Comparative Example C2

Similar to Example 1, the difference is as follows.

The temperature of the sintering treatment was 950 °C and the time thereof was 13 hrs in step 2), and step 3) is not included;

The reaction conditions and reaction steps not mentioned are the same as those in Example 1, and the molecular formula of the active substance particle of the positive active material obtained was Li_{1.03}(Ni_{0.55}Co_{0.10}Mn_{0.33})_{0.996}Zr_{0.002}Ti_{0.002}O₂.

### Comparative Example C3

Similar to Example 1, the difference is as follows.

### 1) Preparation of Positive Active Material Precursor

Amolar ratio of nickel element, manganese element, and cobalt element was Ni:Co:Mn = 55: 15:30, and the positive active material precursor is Ni_{0.55}Co_{0.15}Mn_{0.30}(OH)₂; the pH of the reaction system was adjusted to 11.2.

### 2) Preparation of Active Substance Particle Precursor 1

Lithium carbonate Li₂CO₃ and the positive active material precursor Ni_{0.55}Co_{0.12}Mn_{0.33}(OH)₂ were mixed, and then mechanical mixing was performed; based on a total molar amount (nickel element, cobalt element, and manganese element, that is, Me = Ni+Co+Mn) of metal elements of the positive active material precursor, lithium carbonate was added in such an amount that a ratio of a molar amount of lithium element to the molar amount of Me is Li:Me = 1.02: 1.

The mixture was put into a tube furnace, and was sintered for 13 hrs by heating up to 960 °C at 5 °C/min in an air atmosphere, and then cooled to room temperature together with the furnace and crushed.

The compound containing the element M was not added in step 2), and step 3) is not included.

The reaction conditions and reaction steps not mentioned are the same as those in Example 1, and the molecular formula of the active substance particle of the positive active material obtained was Li(Ni_{0.55}Co_{0.15}Mn_{0.3})_{0.998}Ti_{0.002}O₂.

The main preparation parameters of the positive active materials each of the foregoing Examples and Comparative Examples are shown in Table 1. The product parameters of the positive active materials of each Example and Comparative Example are shown in Table 2.

### II. Application Examples

### [Preparation of Secondary Battery]

1. Preparation of Positive Electrode Sheet: the positive active material prepared in each Example and Comparative Example, a conductive agent carbon black SP and a binder polyvinylidene fluoride (PVDF) were dispersed in a solvent of N-methylpyrrolidone (NMP) in a weight ratio of 18:1:1, and were mixing uniformly, to obtain a positive electrode slurry; the positive electrode slurry was uniformly coated on the aluminum foil of the positive electrode current collector, and then drying, cold pressing were performed to obtain a positive electrode sheet.
2. Negative Electrode Sheet: a lithium metal sheet with a diameter of 18 mm and a thickness of 0.5 mm (Tianjin Zhongneng).
3. Preparation of Electrolytic Solution: ethylene carbonate (EC), ethyl methyl carbonate (EMC), and diethyl carbonate (DEC) were uniformly mixed in a mass ratio of 30:30:40, to obtain an organic solvent; LiPF₆ was dissolved in the above solvent and uniformly mixed, to obtain an electrolytic solution. The concentration of LiPF₆ in the electrolytic solution was 1 mol/L.
4. Preparation of Button Cell: a positive electrode sheet, a polypropylene/polyethylene/polypropylene (PP/PE/PP) composite separator, and a negative electrode sheet were stacked in order, and the foregoing electrolytic solution was added to complete the preparation of a button cell.

A performance test was performed on the secondary battery, and the test results are summarized in Table 2.

### III. Determination Method

### [Test of Low-Cobalt Positive Active Material]

### 1. Scanning electron microscopy image of Low-Cobalt Positive Active Material

A field emission scanning electron microscope (ZEISS Sigma 300) was used with the following settings: a resolution of 20 nm, an acceleration voltage of 0.1-30 KV, magnification of 30-50000 times, and a mode of In-lens. The detailed test process was carried out in accordance with the reference standard JY/T010-1996.

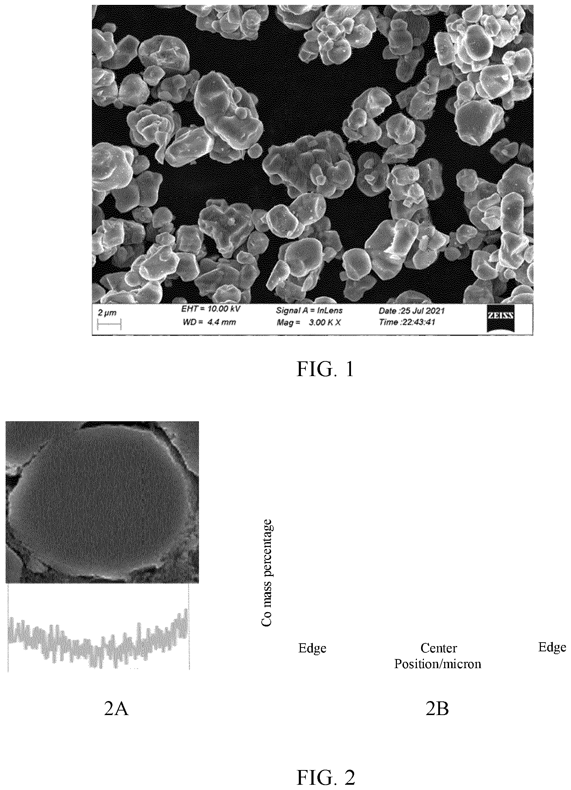

The scanning electron microscope (SEM) of the positive active material of Example 1 is shown in FIG. 1.

### 2. Determination of Content of Each Element in Low-Cobalt Positive Active Material

Determination of Contents of Metal Element and Element S: according to inductively coupled plasma atomic emission spectrometry, plasma atomic emission (ICP-OES, instrument model: Thermo ICAP7400) was used for determination. First, 0.4 g of low-cobalt positive active material was weighed, and added 10 ml (50% concentration) of aqua regia therein, and then placed on a 180°C plate for 30 min. After digestion on the plate, the volume was adjusted to 100 mL. Quantitative method: standard curve method, reference is made to EPA 6010D-2014.

Determination of Contents of Elements N, F, Cl, Br, and I: ion chromatography (IC) was used to test, and reference is made to EN 14582:2016.

The content of oxygen is calculated through the difference between the total amount of low-cobalt positive active material (that is, 1) and the sum of the content of the above detectable elements.

### 3. Determination of Contents of Co Element in Inner Core and Outer Layer of Low-Cobalt Active Material

An argon ion cross section polisher (model JEOL IB-19530CP) and a scanning electron microscope (model ZEISS Sigma 300) (configured with an energy dispersive X-ray spectrometer (EDS, model: Oxford spectrometer OXFord X-Max-50mm²)) were used for determination. The low-cobalt active material, PVDF, and NMP were prepared in a weight ratio of 5:2:23 into a slurry, which was uniformly coated on the copper foil and dried at 60 °C. After ion polishing, a scanning electron microscope was used to perform a line scan of Co element on the cross section of the single-crystalline particle, and the curve reflected the content change of Co element, as shown in FIG. 2.

### 4. Determination of Particle Size Distribution

Instrument, Malvern, Master Size 3000 was used for determination. Determination conditions are as follows: particle refractive index: 1.69, particle absorptivity: 1, solvent refractive index: 1.330. Test cycle is 3 times, sample and background test time is 6s, the number of sample and background tests is 6,000, stirrer/pump revolution is 3000rpm, and opacity is set to 8-12%.

Formulation of Sample: an appropriate amount of low-cobalt positive material was added in water, the total volume was about 110 ml, and sonicate was performed at 53KHz, 120W for 5 min.

The detailed test process was carried out in accordance with the reference standard: GB /T19077-2016/IS013320:2009.

The particle size volume distribution diagram is drawn according to the test data (FIG. 3 is the particle size volume distribution diagram of the low-cobalt material of Example 1). It can be seen from the distribution diagram that some particle diameter accounting for 50% of the total volume is greater than a certain Dv₅₀ value, and some particle diameter accounting for 50% of the total volume is smaller than this Dv₅₀ value, then the Dv₅₀ value is the volume average particle size of the particle.

### [Battery Performance Test]

### 1. Determination of Capacity Performance of Positive Active Material

At 25 °C, a button cell was charged at a constant current of 0.1C until a voltage was 4.35V, and then was charged at a constant voltage until a current was less than or equal to 0.05C; then standing was performed for 5 minutes and discharging was performed at a constant current of 0.1C until a voltage was 2.8V. At this time, a discharge capacity was a normal temperature gram capacity. The button cell was placed at a low temperature of -10 °C, and a low-temperature gram capacity was obtained according to the foregoing test. The percentage of a ratio of the low-temperature gram capacity to the normal temperature gram capacity is a capacity retention rate.

### 2. Determination of DC Impedance DCR of Secondary Battery

At a low temperature of -10 °C, a button cell was charged at a constant current of 0.1C until a voltage was 4.35V, and then was charged at a constant voltage until a current was less than or equal to 0.05C, and then the button cell was adjusted to a state of charge (SOC) of 20%, and discharged at 5C for 10s, and a voltage drop before and after the discharge was recorded. A ratio of the voltage drop before and after the discharge to the discharge current is a DC impedance of the battery.

**Table 1: Process Parameter of Steps 2)-4) In Preparation of Low-Cobalt Positive Active Material**

| Serial Num ber of Exam ple | 2) Preparation of Active Substance Particle Precursor 1 | | | | | 3) Preparation of Active Substance Particle Precursor 2 | 4) Preparation of Active Substance Particle Having Coating Layer | |
|---|---|---|---|---|---|---|---|---|
| | Positive active material precursor | Li:Me (Ni+ Co+ Mn) molar ratio | Oxid e of M | Sintering temperature and time | M:Me(Ni+Co +Mn) molar ratio | Co:Me (Ni+Co+Mn) molar ratio | O xi de of Q | Q: Me (Ni+Co+ Mn) molar ratio |
| 1 | Ni_{0.556}Co_{0.11}Mn _{0.334}(OH)₂ | 1.06:1 | ZrO₂ | 940°C, 13h | 2.031×10⁻³:1 | 1.14×10⁻²:1 | Ti O₂ | 2.031×10 ⁻³:1 |
| 2 | Ni_{0.556}Co_{0.11}Mn _{0.334}(OH)₂ | 1.06:1 | ZrO₂ | 940°C, 13h | 2.031×10⁻³:1 | 1.14×10⁻²: 1 | / | / |
| 3 | Ni_{0.556}Co_{0.11}Mn _{0.334}(OH)₂ | 1.06:1 | ZrO₂ | 960°C, 13h | 2.031×10⁻³:1 | 1.14×10⁻²: 1 | Ti O₂ | 2.031×10 ⁻³:1 |
| 4 | Ni_{0.607}Co_{0.09}Mn _{0.304}(OH)₂ | 1.06:1 | SrO | 930°C, 12 h | 1.014×10⁻³:1 | 1.11×10⁻²:1 | Ti O₂ | 2.031×10 ⁻³:1 |
| 5 | Ni_{0.676}Co_{0.08}Mn _{0.256}(OH)₂ | 1.06:1 | MgO | 920°C, 12h | 2.06×10⁻³:1 | 2.36×10⁻²:1 | Ti O₂ | 2.06×10⁻³:1 |
| 6 | Ni_{0.70}sCo_{0.09}Mn _{0.202}(OH)₂ | 1.06:1 | MgO | 920°C, 11h | 2.031×10⁻³:1 | 1.11×10⁻²:1 | Ti O₂ | 2.031×10 ⁻³:0.996 |
| 7 | Ni_{0.707}Co_{0.04}Mn _{0.253}(OH)₂ | 1.06:1 | ZrO₂ | 910°C, 14h | 2.031×10⁻³:1 | 1.05 × 10⁻²: 1 | Ti O₂ | 2.031×10 ⁻³:1 |
| Comp ara tiv e Ex am ple C1 | Ni_{0.55}Co_{0.12}Mn_{0 33}(OH)₂ | 1.02:1 | / | 960°C, 13h | / | / | Ti O₂ | 0.002:0.9 98 |
| Comp arativ e Exam ple C2 | Ni_{0.556}Co_{0.11}Mn _{0.334}(OH)₂ | 1.06: 1 | ZrO₂ | 950°C, 13h | 0.002:0.996 | / | Ti O₂ | 0.002:0.9 96 |
| Comp arativ e | Ni_{0.55}C_{00.15}Mn_{0 .30}(OH)₂ | 1.02:1 | / | 960°C, 13h | / | / | Ti O₂ | 0.002:0.9 98 |
| Exam ple C3 | | | | | | | | |

**Table 2: Test Result of Example and Comparative Example**

| Serial Number of Example | Property of Low-Cobalt Positive Active Material | | | Battery Performance | |
|---|---|---|---|---|---|
| | Chemical formula | Dᵥ50( µ m) | Ratio of cobalt conte nt in outer layer and inner core | DC resistance impedance/D CR (mΩ) | Low-temperatu re capacity retention rate (%) |
| 1 | Li_{1.03}(Ni_{0.55}CO_{0.12}Mn_{0.33})_{0.996}Zr_{0.002}Ti _{0.002}O₂ | 2.8 | 1.5 | 178.3 | 89.5 |
| 2 | Li_{1.03} (Ni_{0.55} Co_{0.12}Mn_{0.33})_{0.998}Zr_{0.002}O₂ | 2.8 | 1.5 | 189.2 | 88.1 |
| 3 | Li_{1.03}(Ni_{0.55}CO_{0.12}Mn_{0.33})_{0.996}Zr_{0.002}Ti _{0.002}O₂ | 3.1 | 1.5 | 182.1 | 89.6 |
| 4 | Li_{1.03}(Ni_{0.6}Co_{0.1}Mn_{0.3})_{0.997}Sr_{0.001}Ti_{0.00 2}O₂ | 3.2 | 1.7 | 193.4 | 86.7 |
| 5 | Li_{1.03} (Ni_{0.65}CO_{0.1}Mn_{0.25})_{0.996}Mg_{0.002}Ti _{0.002}O₂ | 1.8 | 1.9 | 153.5 | 91.2 |
| 6 | Li_{1.03} (Ni_{0.70}CO_{0.10}Mn_{0.2})_{0.996}Mg_{0.002}Ti _{0.002}0₂ | 2.5 | 1.4 | 171.2 | 89.9 |
| 7 | Li_{1.03} (Ni_{0.7}Co_{0.05}Mn_{0.25})_{0.996}Zr_{0.002}Ti_{0. 002}O₂ | 3.5 | 2.0 | 163.4 | 90.7 |
| Comparative Example C1 | Li(Ni_{0.55}Co_{0.12}Mn_{0.33})_{0.998}Ti_{0.002}O₂ | 4.5 | 1.0 | 372.4 | 69.1 |
| Comparative Example C2 | Li_{1.03}(Ni_{0.55}Co_{0.10}Mn_{0.33})_{0.996}Zr_{0.002}Ti _{0.002}O₂ | 4.0 | 1.0 | 287.1 | 75.7 |
| Comparative Example C3 | Li(Ni_{0.55}Co_{0.15}Mn_{0.30})_{0.998}Ti_{0.002}O₂ | 4.6 | 1.0 | 243.4 | 81.3 |

Compared with Comparative Examples 1-3, Examples 1-7 of the present application show that the single-crystalline low-cobalt ternary material of the present application had a smaller median particle size and an uneven distribution of Co elements; and thus, a secondary battery with lower current resistance and higher capacity retention at low temperature and high voltage was obtained. It can be seen that the secondary battery including the single-crystalline low-cobalt ternary material of the present application had improved power and cycle performance at low temperature and high voltage.

For the positive active material prepared in Comparative Examples 1-3, the Co elements were unevenly distributed; even for the material with a relatively high cobalt content such as Comparative Example 3, the power and cycle performance of the secondary battery prepared was also poor at low temperature and high voltage.

In Examples 1-7 of the present application, the cobalt content in the positive active material was relatively low, thereby reducing the cost; meanwhile, if the mole fraction of each element in the chemical formula satisfied a certain proportional relationship and was within a certain range, the positive active material was ensured to have high structural stability; the particle size of the positive active material was in the range of 1.8µm -3.5µm, which made the migration path of lithium ions in the positive active material shorter. Moreover, the Co content per unit area in the outer layer in the single particle of the positive active material was higher than that in the inner core, which made the surface structure have less Li/Ni disorder, had a faster rate of lithium-ion deintercalation and better dynamic performance at low temperature.

It should be noted that the present application is not limited to the foregoing embodiments. The foregoing embodiments are merely examples, and embodiments having substantially the same constitution as the technical idea and exerting the same effects within the technical solution of the present application are all included within the technical scope of the present application. In addition, various modifications may be made to the embodiments by persons skilled in the art without departing from the spirit and scope of the present application, and other embodiments that are constructed by combining some of the constituent elements of the embodiments are also included in the scope of the present application.

## Claims

1. A single-crystalline-structured low-cobalt ternary positive material, wherein
a chemical formula of the low-cobalt ternary positive material is Li₁₊ₓ(NiₐCo_{b}Mn_{c})_{1-d}M_{d}O_{2-y}A_{y}, wherein M is one or more selected from Zr, Sr, B, Ti, Mg, Sn, and Al, A is one or more selected from S, N, F, Cl, Br and I, 0 ≤ x ≤ 0.5, 0.05 ≤ b ≤ 0.14, 3.5≤ a/b ≤ 15, 0.02≤ b×c/a² ≤ 0.21, a+b+c = 1, 0 ≤ d ≤ 0.1, 0 ≤ y < 0.2; and
in a single particle of the single-crystalline low-cobalt ternary positive material, a ratio of an average Co content per unit area of an outer layer to an average Co content per unit area of an inner core on a cross section passing through a geometric center of the particle is in a range of 1.2-5.0:1, optionally, in a range of 1.4-2.0:1, wherein the outer layer is a region from a surface of the particle to a depth of 200 nm towards the geometric center of the particle, and the inner core is a spherical region with a diameter of 200 nm centered on the geometric center of the particle.

2. The low-cobalt ternary positive material according to claim 1, wherein the particle of the low-cobalt ternary positive material has a coating layer, and the coating layer is an oxide containing Q, wherein Q is one or more selected from Zr, Sr, B, Ti, Mg, Sn, and Al.

3. The low-cobalt ternary positive material according to claim 1 or 2, wherein, in the chemical formula, 0.5 ≤ a ≤ 0.7.

4. The low-cobalt ternary positive material according to any one of claims 1 to 3, wherein the low-cobalt ternary positive material is a particle having a median particle size Dv₅₀ in a range of 1.6µm-3.6µm, optionally, in a range of 1.8µm-3.5µm.

5. The low-cobalt ternary positive material according to any one of claims 1 to 4, wherein based on an element Q in the oxide containing Q relative to the low-cobalt ternary positive material having a coating layer, a content of the Q is 500-5000 ppm.

6. A method for preparing a low-cobalt ternary positive material, comprising:
step S1: mixing and sintering a positive active material precursor, a lithium salt, and an M-containing compound and performing crushing to obtain an active substance particle precursor 1, wherein a chemical formula of the positive active material precursor is NiₐCo_{b}Mn_{c}(OH)₂, wherein 3.5≤ a/b ≤ 15, 0.02≤ b×c/a² ≤ 0.21, a+b+c = 1; 0.5≤ a ≤ 0.7; and
step S2: mixing and sintering the active substance particle precursor 1 and a Co-containing compound to obtain an active substance particle precursor 2 with a surface layer rich in Co; performing tempering to obtain a low-cobalt ternary positive material;
wherein the low-cobalt ternary positive material is of a single crystal structure, and a chemical formula thereof is Li₁₊ₓ(NiₐCo_{b}Mn_{c})_{1-d}M_{d}O_{2-y}A_{y}, wherein M is one or more selected from Zr, Sr, B, Ti, Mg, Sn, and Al, A is one or more selected from S, N, F, Cl, Br and I, 0 ≤ x ≤ 0.5, 0.05 ≤ b ≤ 0.14, 3.5≤ a/b ≤ 15, 0.02≤ b×c/a ²≤ 0.21, a+b+c = 1, 0 ≤ d ≤ 0.1, 0 ≤ y < 0.2; and
in a single particle of the single-crystalline low-cobalt ternary positive material, a ratio of an average Co content per unit area of an outer layer to an average Co content per unit area of an inner core on a cross section passing through a geometric center of the particle is in a range of 1.2-5.0:1, optionally, in a range of 1.4-2.0: 1, wherein the outer layer is a region from a surface of the particle to a depth of 200 nm towards the geometric center of the particle, and the inner core is a spherical region with a diameter of 200 nm centered on the geometric center of the particle.

7. The method according to claim 6, wherein the M-containing compound in the step S1 is one or more selected from magnesium oxide, strontium oxide, titanium oxide, tin oxide, zirconium oxide, aluminum oxide, and boron oxide, optionally, zirconium oxide, strontium oxide, or magnesium oxide.

8. The preparation method according to claim 6 or 7, wherein the step S2 further comprises step S2a: coating the active substance particle precursor 2 with the surface layer rich in Co with an oxide containing Q.

9. The method according to claim 8, wherein the oxide containing Q in the step S2a is one or more selected from aluminum oxide, tin oxide, zirconium oxide, boron oxide, and titanium oxide, optionally, titanium oxide.

10. The method according to any one of claims 6 to 9, wherein the Co-containing compound in the step S2 is one or more selected from cobalt hydroxide, cobalt oxyhydroxide, cobalt oxide, cobalt acetate, or cobalt oxalate.

11. The preparation method according to claims 6 to 10, wherein in the step S2, the Co-containing compound is added in such an amount that a ratio of a molar amount of the Co element added thereto to a total molar amount of the metal elements Ni, Co, Mn in the positive active material precursor obtained in the step S1 is 0.005-0.05:1, optionally, 0.01-0.03:1.

12. The method according to any one of claims 6 to 11, wherein in the step S2, a sintering temperature is in a range of 650-750 °C, optionally, in a range of 700-720 °C, and a sintering time is 2-8 hrs, optionally, 4-5 hrs.

13. A secondary battery, comprising:
the low-cobalt ternary positive material according to any one of claims 1 to 5 or the low-cobalt ternary positive material prepared by the method according to any one of claims 6 to 12.

14. A battery module, comprising the secondary battery according to claim 13.

15. A battery pack, comprising the battery module according to claim 14.

16. A power consumption apparatus, comprising at least one selected from the second battery according to claim 13, the battery module according to claim 14, or the battery pack according to claim 15.
